# EUROPEAN PATENT APPLICATION

(11) **EP 3 285 495 A1**
(43) Date of publication of application: **21.02.2018**
(21) Application number: 16779496.5
(22) Date of filing: 16.03.2016
(51) Int. Cl.: H04N 21/472, H04N 21/258

(54) **VIDEO ONLINE REMINDING METHOD, DEVICE AND SYSTEM**

(30) Priority: 17.04.2015 CN 201510185512
(71) Applicant: ZTE Corporation, Shenzhen, Guangdong 518057 (CN)
(72) Inventor: CAO, Chuandong, Shenzhen, Guangdong 518057 (CN); ZHANG, Yuzhou, Shenzhen, Guangdong 518057 (CN); SU, Jingui, Shenzhen, Guangdong 518057 (CN)
(74) Representative: Winter, Brandl, Fürniss, Hübner, Röss, Kaiser, Polte - Partnerschaft mbB
(86) International application number: PCT/CN2016/076537
(87) International publication number: WO 2016/165521

(57) **Abstract**

Provided are a video online reminding method, device and system. The video online reminding method includes the following steps: a service system receives a selection instruction for a video for which a user terminal needs an online reminder, and determining the video for which the online reminding is needed according to the selection instruction; and when the video for which the online reminding is needed is online, sending, by the service system, a reminder trigger message to a server for the server to remind the user terminal that the video selected by the user terminal has been online according to the reminder trigger message. Solved is a problem in the existing art that a user cannot timely watch a video the user needs to watch and the user experience is affected. The user's expectation of timely watching is achieved and the user experience is improved.

## Description

### TECHNICAL FIELD

The present invention relates to the field of Internet Protocol Television, IPTV, in particular, relates to a video online reminding method, device and system.

### BACKGROUND

IPTV is a broadband network service that is an integration of various technologies such as Internet, multimedia and communications, and is used for supplying a variety of interactive services including digital TV to a home user via a broadband cable television network. Over The Top, OTT, namely Internet companies over operators, develops a variety of open-internet based video and data serving service and emphasizes the independence of services and physical networks.

Users can enjoy IPTV services through a variety of terminals such as PC terminals, set-top boxes, televisions, and smartphones. The IPTV & OTT service provides a large amount of new videos. In the existing art, a service system of IPTV is responsible for pushing new video information of Video on Demand, VOD, program to be on line to the users upon receiving an inquiry instruction for a new video from the user terminal, so that the user terminal timely finds the videos to be on line and when a video that interests the user is on line, the user can watch the video. However, everyday there are a large amount of push information for new videos to be on line, so the user is liable to forget when the video that interests the user is on line, causing that the user fails to watch the video the user needs in time and affecting his experience effect, thereby not achieving a purpose that the service system pushes its new videos to be on line to the user terminal.

### SUMMARY

Embodiments of the present invention provide a video online reminding method, device and system, solving a problem in the existing art that the user cannot watch the video he needs in time and the user experience is affected.

To solve the above problem, embodiments of the present invention employ the following technical solutions.

A video online reminding method includes the following steps: a service system receives a selection instruction for a video for which an online reminder is required by a user terminal, and determines the video for which the online reminder is required according to the selection instruction; and when the video for which the online reminder is required is online, the service system sends a reminder trigger message to a server for the server to remind the user terminal that the video selected by the user terminal is online according to the reminder trigger message.

Further, the reminder trigger message includes release information and reservation information of the video for which the online reminder is required.

A video online reminding method includes the following steps: a server receives a reminder trigger message sent by a service system; and the server reminds a user terminal that a video selected by the user terminal has been online according to the reminder trigger message.

Further, the reminder trigger message includes release information and reservation information of the video for which the online reminder is required.

Further, before the server reminds the user terminal that the video selected by the terminal has been online, the method further includes: determining whether the user terminal is online currently; immediately reminding the user terminal that the video selected by the terminal has been online if the user terminal is online currently; and reminding the user terminal, at next time when the user terminal is online, that the video selected by the user terminal has been online if the user terminal is off.

A video online reminding method includes the following steps: upon receiving a selection instruction for a video for which an online reminder is required by the user terminal, a service system determines the video for which the online reminder is required according to the selection instruction and sends a reminder trigger message to a server when the video for which the online reminder is required is online; and the server reminds the user terminal that the video selected by the user terminal is online according to the reminder trigger message.

Further, before the server reminds the user terminal that the video selected by the user terminal has been online, the method further includes: determining whether the user terminal is online currently; immediately reminding the user terminal that the video selected by the user terminal is online if the user terminal is online currently; and reminding the user terminal, at next time when the user terminal is online, that the video selected by the user terminal is online if the user terminal is off.

A video online reminding device includes: an instruction execution module, configured to receive, by a service system, a selection instruction for a video for which an online reminder is required by the user terminal, and determine the video for which the online reminder is require according to the selection instruction; and a message sending module, configured to, when the video for which the online reminder is required is online, send a reminder trigger message to a server for the server to remind the user terminal that the video selected by the terminal is online according to the reminder trigger message.

A video online reminding device includes: a message receiving module, configured to receive, by a server, a reminder trigger message sent by a service system; and a reminder module, configured to remind, by the server, a user terminal that a video selected by the terminal has been online according to the reminder trigger message.

Further, the video online reminding device further includes a determination module configured to determine by the server whether the user terminal is online currently.

The message receiving module is configured to immediately remind the user terminal that the video selected the user terminal has been online, if the user terminal is online currently.

The message receiving module is configured to remind the user terminal at next time when the user terminal is online that the video selected by the user terminal has been online, if the user terminal is off currently.

A video online reminding system includes a server and a service system.

The service system is configured to, upon receiving a selection instruction for a video for which an online reminder is required by a user terminal, determine the video for which the online reminder is required according to the selection instruction and send a reminder trigger message to the server.

The server is configured to remind the user terminal that the video selected by the user terminal has been online according to the reminder trigger message.

In an embodiment of the present invention, a computer storage medium is also provided. The computer storage medium may store executable instructions for performing the video online reminding methods in the above embodiments.

Advantageous effects of embodiments of the present invention are described as follows.

Embodiments of the present invention provide a video online reminding method, device and system. The service system receives the selection instruction for the video for which the online reminder is required by the user terminal and determines the video for which the online reminder is required according to the selection instruction. When the video for which the online reminder is required is online, the service system sends the reminder trigger message to the server, so that the server reminds the user terminal that the video selected by the user terminal has been online according to the reminder trigger message. Through the above scheme, since the server can remind the user terminal at the first time, it is realized that the user can timely know that the video he needs to watch has been online, and thus the user' expectation for timely watching is achieved, thereby improving the user's experience.

### BRIEF DESCRIPTION OF DRAWINGS

FIG. 1 is a flowchart of a video online reminding method applied to a service system, provided by a first embodiment of the present invention.
FIG. 2 is a flowchart of a video online reminding method applied to a server, provided by the first embodiment of the present invention.
FIG. 3 is a flowchart of a video online reminding method applied to a service system and a server, provided by the first embodiment of the present invention.
FIG. 4 is a specific schematic flowchart of a video online reminding method, provided by the first embodiment of the present invention.
FIG. 5 is a schematic structural diagram of a video online reminding device applied to a service system, provided by a second embodiment of the present invention.
FIG. 6 is a schematic structural diagram of a video online reminding device applied to a server, provided by the second embodiment of the present invention.

### DETAILED DESCRIPTION

The present invention will be described below in further detail through specific embodiments with reference to the accompanying drawings.

### First embodiment

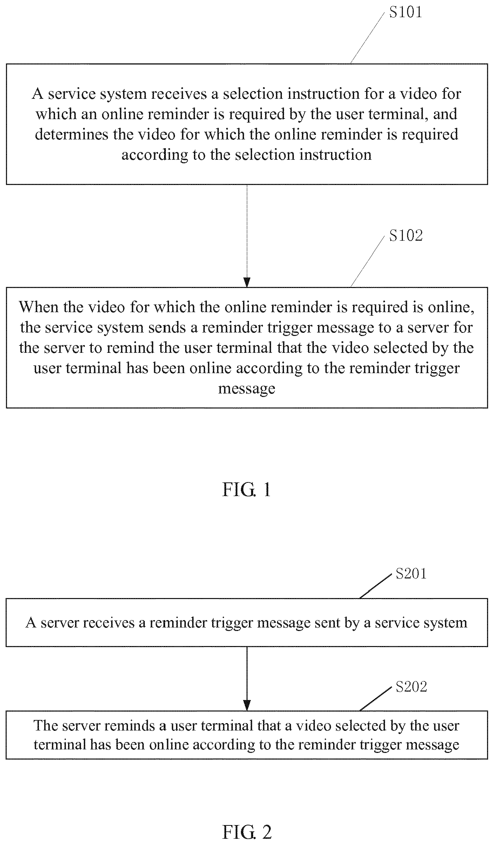

As shown in Fig. 1, FIG. 1 is a flowchart of a video online reminding method applied to a service system, provided by the first embodiment of the present invention. Please refer to FIG. 1, the video online reminding method includes steps S101 and S102.

In step S101, the service system receives a selection instruction for a video for which an online reminder is required by a user terminal, and determines the video for which the online reminder is required according to the selection instruction.

It should be noted that in the present invention, the service system includes an IPTV system and/or OTT system, etc. Preferably, the service system includes a service system configured for providing IPTV and OTT services. In the present embodiment, the present scheme will be illustrated mainly by taking the service system including the service system for providing IPTV and OTT services as an example. The service system is configured to provide the login and access for the user terminal, the display of forecasts of new films to be online, the addition, deletion, and inquiry of online reminders of new films, the storage of reminder data reserved by the user, the release of the online data of new films and the push of the online message to the server. The specific process of the S101 includes the following steps: the service system establishes a connection with the user terminal and pushes the IPTV and OTT services including information about new video to be online to the user terminal with a push method for information about the new video to be online including an inquiry entry for the new video to be online; the service system pushes the information about new video to be online recently to the user terminal after receiving an inquiry instruction for the new videos to be online from the user terminal so that the user terminal can inquire the new video to be online; or the service system periodically performs pushing to the user terminal; the service system receives from the user terminal a selection instruction for a video, that is, the user selects a video for which the online reminder is required through the user terminal and then sends the selection instruction to the service system, in this way, the service system receives the selection instruction for the video for which the online reminder is required by the user terminal, and then the service system determines the video for which the online reminder is required according to the selection instruction. The process of determining the video for which the online reminder is required includes: setting an identification for the video for which the online reminder is required according to the selection instruction so that a response can be timely made when the video is officially online. At this moment, the new video to be online may be stored in the service system. Alternatively, the information about the new video to be online may be stored in the service system and only when the new video is online, the complete video of the new video is stored in the service system. It is not limited to the number of the videos for which the online reminder is required, which may be one or multiple. The video includes, but is not limited to, movies, radio programs, TV series and variety shows. The information about the new video to be online includes, but is not limited to, trailers, briefs, posters, and starting lists of the new video to be online.

In step S102, when the video for which the online reminder is required is online, the service system sends a reminder trigger message to a server for the server to remind the user terminal that the video selected by the user terminal has been online according to the reminder trigger message.

The number of videos for which the online reminder is required may be one or multiple. Once a video for which the online reminder is required is online, the reminder trigger message needs to be sent to the server. For example, if the videos for which the online reminder is required are multiple and their online times are different, the reminder trigger message corresponding to a respective video needs to be sent to the server individually when the respective video is online. The reminder trigger message includes: release information and reservation information of the video for which the online reminder is required. The release information includes video name, video information, video release time, video duration, video content introduction and the like. The reservation information includes: user information and video name of the video reserved by the user. On the server side, after the server receives the reminder trigger message, the server reminds the user terminal that the video selected by the user terminal has been online based on the reminder trigger message.

As shown in FIG. 2, FIG. 2 is a flowchart of a video online reminding method applied to a server, provided by the first embodiment of the present invention. Please referring to FIG. 2, the video online reminding method includes steps S201 and S201,

In step S201, the server receives a reminder trigger message sent by a service system.

In the present embodiment, it should be noted that the server is configured to push a corresponding message to the user terminal according to the received information sent by the service system. The reminder trigger message includes: release information and reservation information of the video for which the online reminder is required. The release information includes video name, video information, video release time, video duration, video content introduction and the like. The reservation information includes: user information and video name of the video reserved by the user, etc.

In step S202, the server reminds a user terminal that a video selected by the user terminal has been online according to the reminder trigger message.

The reminding manner by which the server reminds the user terminal that the video selected by the user terminal has been online includes sending pop-up information to remind the user, or sending pop-up information to remind the user while carrying information such as a link for the video required by the user. In the present embodiment, the server may also send the online reminder of the new video to the user terminals in the whole network.

Before the server reminds the user terminal that the video selected by the user terminal has been online, the method further includes: determining whether the user terminal is online currently; reminding immediately the user terminal that the video selected by the user terminal has been online if the user terminal is online currently; and reminding, at next time when user is online, the user terminal that the video selected by the user terminal has been online if the user terminal is off currently. In this way, when the user turns on his user terminal, the user can know at the first time that the video he needs to watch has been online, and then he can timely watch the video in which he interests, thereby improving the experience of video watching.

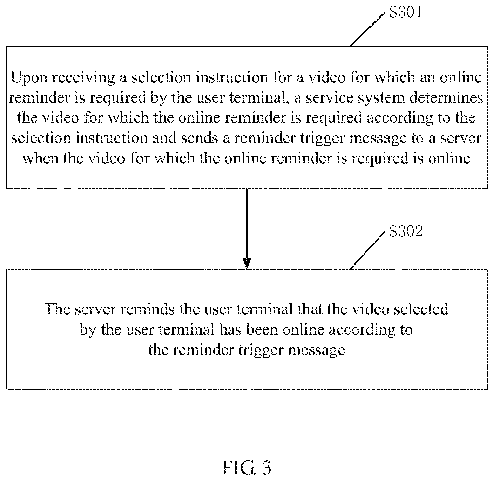

As shown in FIG. 3, FIG. 3 is a flowchart of a video online reminding method applied to a service system and a server, provided by the first embodiment of the present invention. Please referring to FIG. 3, the video online reminding method includes steps S301 and S302.

In step S301, upon receiving a selection instruction for a video for which an online reminder is required by a user terminal, the service system determines the video for which the online reminder is required according to the selection instruction and sends a reminder trigger message to a server when the video for which the online reminder is required is online.

The process that the service system determines the video for which the online reminder is required according to the received selection instruction includes: setting an identification for the video for which the online reminder is required according to the selection instruction, so that a response can be timely made when the video is officially online. At this time, the new video to be online may be stored in the service system. Alternatively, the information about the new video to be online may be stored in the service system and only when the new video is online, the complete video of the new video is stored in the service system. It is not limited to the number of videos for which the online reminder is required, which may be one or multiple.

Before the service system receives the selection instruction for the video for which the online reminder is required by the user terminal, the method further includes the service system pushing the information about the new videos to be online to the user terminal. The specific pushing manner for the information about the new videos to be online includes: after receiving an inquiry instruction for the new videos to be online from the user terminal, the service system pushes the information about the new videos to be online to the user terminal according to the inquiry instruction. Specifically, the service system establishes a connection with the user terminal and pushes the IPTV and OTT services to the user terminal, which includes an inquiry entry of the new video to be online; and pushes the information about new videos to be online in recent time to the user terminal after receiving the inquiry instruction for the new videos to be online so that the user terminal can inquire about the new video to be online; or the service terminal periodically pushes the information about the new videos to be online and the like to the user terminal.

In step S302, the server reminds the user terminal that the video selected by the user terminal has been online according to the reminder trigger message.

Before the server reminds the user terminal that the video selected by the user terminal has been online, the method further includes: determining whether the user terminal is online currently; reminding immediately the user terminal that the video selected by the user terminal has been online, if the user terminal is online currently; and reminding the user terminal, at the time when user is online again, that the video selected by the user terminal has been online if the user terminal is off currently. In this way, when the user turns on his user terminal, the user can know at the first time that the video he needs to watch is online, and then he can timely watch the video in which he interests, thereby improving the experience of video watching.

In the present embodiment of the invention, a computer storage medium is also provided. The computer storage medium may store executable instructions for performing the video online reminding methods in the above embodiments.

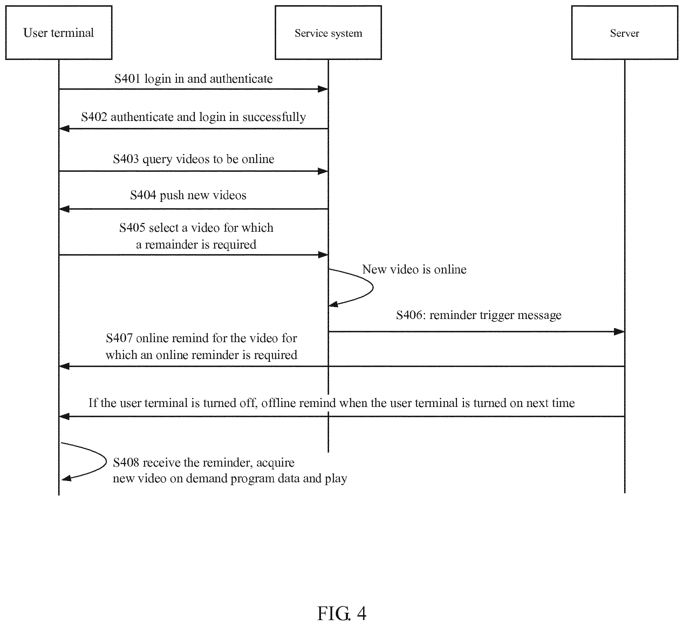

For example, as shown in FIG. 4, FIG. 4 is a specific schematic flowchart of a video online reminding method provided by the first embodiment of the present invention. Please refer to FIG. 4.

In step S401, the user terminal logs in the service system for providing IPTV and OTT services through the identity information.

In step S402, the service system authenticates the user terminal, and pushes the IPTV and OTT services including an inquiry entry for the new videos to be online, provided by the service system, to the user terminal after the authentication is passed.

In step S403, the user terminal inquiries the new videos to be online and sends an inquiry instruction to the service system.

In step S404, the service system pushes the information about the new videos to be online to the user terminal according to the inquiry instruction.

In step S405, the user terminal selects the video for which the online reminder is required by the user terminal from the information about videos to be online and sends a selection instruction to the service system.

In step S406, when the video for which the online reminder is required is online, the service system sends a reminder trigger message to the server.

In step S407, the server reminds the user terminal that video selected by the user terminal is online according to the reminder trigger message. At this time, if the user terminal is off, the server reminds the user terminal at the next time when the terminal is online or the server reminds offline the user terminal at the next time when the user terminal is turned on.

In step S408, the user terminal obtains the video for which the online reminder is required for watching, according to the reminder message.

### Second embodiment

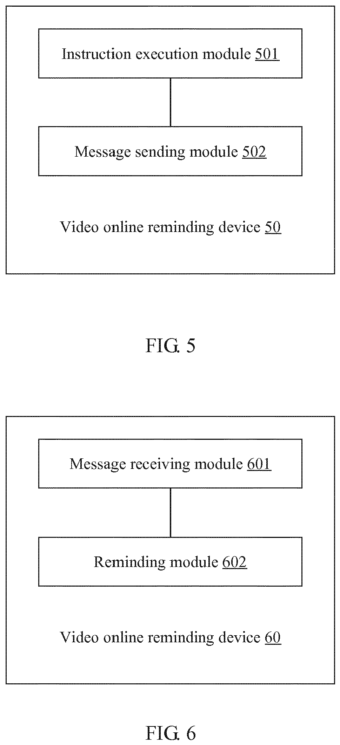

As shown in FIG. 5, FIG. 5 is a schematic structural diagram of a video online reminding device applied to a service system, provided by a second embodiment of the present invention. Please refer to FIG. 5, the video online reminding device 50 includes: an instruction execution module 501 and a message sending module 502. The instruction execution module 501 is configured to receive, by a service system, a selection instruction for a video for which an online reminder is required, and determine the video for which the online reminding is required according to the selection instruction. The message sending module 502 is configured to: when the video for which the online reminder is required is online, send, by the service system, a reminder trigger message to a server for the server to remind the user terminal that the video selected by the user terminal has been online according to the reminder trigger message. By arranging the video online reminding device 50 in the service system for providing the IPTV and OTT services, the service system can realize reminding the user terminal that the video for which the online reminder is required timely when the video for which the online reminder is required is online, thereby improving the user's experience. In the present embodiment, the video online reminding device 50 may further include an information pushing module configured to receive an inquiry instruction for the new videos to be online from the user terminal and push the information about the new videos to be online to the user terminal according to the inquiry instruction.

As shown in FIG. 6, FIG. 6 is a schematic structural diagram of a video online reminding device applied to a server, provided by the second embodiment of the present invention. Please refer to FIG. 6, the video online reminding device 60 includes a message receiving module 601 and a reminding module 602. The message receiving module 601 is configured to receive, by a server, a reminder trigger message sent by a service system. The reminding module 602 is configured to remind, by the server, a user terminal that a video selected by the user terminal has been online according to the reminder trigger message. By arranging the video online reminding device 60 in the server, the server can timely remind the user terminal that the video selected by the user terminal has been online according to the reminder trigger message sent by the service system.

The present invention further provides a video online reminding system including a server and a service system. The service system is configured to, upon receiving a selection instruction for a video for which an online reminder is required by a user terminal, determine the video for which the online reminder is acquired according to the selection instruction, and send a reminder trigger message to a server when the video for which the online reminder is acquired. The server is configured to remind the user terminal that the video selected by the user terminal has been online according to the reminder trigger message.

The present invention provides a video online reminding method, device and system. The video for which the online reminder is needed is selected from the videos to be online, and the service system timely sends reminding message to the user terminal through the server when the video for which online reminder is required by the user is online. It is realized that the user can timely know that the video he needs to watch has been online and then he can watch the video at a first time, thereby improving the user experience.

The foregoing is a further detailed description of the present invention in combination with the specific embodiments. It should not be considered that the specific implementation of the present invention is limited to these embodiments. For one skilled in the art, various modifications or substitutions may be made without departing from the spirit of the invention, and should be considered as falling within the scope of the present invention.

### INDUSTRIAL APPLICABILITY

A video online reminding method, device and system are provided by the present invention. The service system receives the selection instruction for the video for which an online reminder is required by the user terminal and determines the video for which the online reminder is required according to the selection instruction; and when the video for which the online reminder is required is online, the service system sends the reminder trigger message to the server. In this way, the server reminds the user terminal that the video selected by the user terminal has been online according to the reminder trigger message. Through the above scheme, since the server can remind the user terminal at the first time, it is realized that the user can timely know that the video he needs to watch has been online, and thus the user' expectation for timely watching is achieved, thereby improving the user's experience.

## Claims

1. A video online reminding method, comprising:
receiving, by a service system, a selection instruction for a video for which an online reminder is required by a user terminal, and determining the video for which the online reminder is required according to the selection instruction; and
when the video for which the online reminder is required is online, sending, by the service system, a reminder trigger message to a server for the server to remind the user terminal that the video selected by the user terminal has been online according to the reminder trigger message.

2. The video online reminding method of claim 1, wherein the reminder trigger message comprises release information and reservation information of the video for which the online reminder is required.

3. A video online reminding method, comprising:
receiving, by a server, a reminder trigger message sent by a service system; and
reminding, by the server, a user terminal that a video selected by the user terminal has been online according to the reminder trigger message.

4. The video online reminding method of claim 3, wherein the reminder trigger message comprises release information and reservation information of the video for which the online reminder is required.

5. The video online reminding method of claim 3 or claim 4, wherein before reminding by the server the user terminal that the video selected by the user terminal has been online, the method further comprises:
determining whether the user terminal is online currently;
immediately reminding the user terminal that the video selected by the user terminal has been online if the user terminal is online currently; and
reminding the user terminal, at next time when the user terminal is online, that the video selected by the suer terminial has been online if the user terminal is off currently.

6. A video online reminding method, comprising:
upon receiving by a service system a selection instruction for a video for which an online reminder is required by a user terminal, determining, by the service system, the video for which the online reminder is required according to the selection instruction, and when the video for which the online reminder is required is online, sending by the service system a reminder trigger message to a server; and
reminding, by the server, the user terminal that the video selected by the user terminal has been online according to the reminder trigger message.

7. The video online reminding method of claim 6, wherein before reminding by the server the user terminal that the video selected by the user termianl has been online, the method further comprises:
determining whether the user terminal is online currently;
immediately reminding the user terminal that the video selected by the user terminal has been online if the user terminal is online currently; and
reminding the user terminal, at next time when the user terminal is online, that the video selected by the user terminal has been on online if the user terminal is off currently.

8. A video online reminding device, comprising:
an instruction execution module, configured to receive, by a service system, a selection instruction for a video for which an online reminder is requiered by the user terminal, and determine the video for which the online reminder is required according to the selection instruction; and
a message sending module, configured to, when the video for which the online reminding is required is online, send, by the service system, a reminder trigger message to a server for the server to remind the user terminal that the video selected by the user terminal has been online according to the reminder trigger message.

9. A video online reminding device, comprising:
a message receiving module, configured to receive, by a server, a reminder trigger message sent by a service system; and
a reminding module, configured to remind, by the server, a user terminal that a video selected by the user terminal has been online according to the reminder trigger message.

10. The video online reminding device of claim 9, further comprising a determination module configured to determine by the server whether the user terminal is online currently, wherein
the message receiving module is configured to immediately remind the user terminal that the video selected by the user terminal has been online if the user terminal is online currently; and
the message receiving module is configured to remind the user terminal, at next time when the user terminal is online, that the video selected by the user terminal has been online if the user terminal is off.

11. A video online reminding system, comprising a server and a service system, wherein
the service system is configured to, upon receiving a selection instruction for a video for which an online reminder is required by the user terminal, determine the video for which the online remindre is required according to the selection instruction, and when the video for which the online reminder is required is online, send a reminder trigger message to the server,
the server is configured to remind the user terminal that the video selected by the user terminal has been online according to the reminder trigger message.
